# EUROPEAN PATENT SPECIFICATION

(11) **EP 1 582 414 B1**
(45) Date of publication and mention of the grant of the patent: **16.05.2007**
(21) Application number: 05007116.6
(22) Date of filing: 31.03.2005
(51) Int. Cl.: B60R 19/18, B60R 19/26

(54) **Methods for modifying a crash deceleration pulse**
Verfahren zum Ändern eines Unfall-Verzögerungsimpulses
Procédés pour modifier un pic de décélération d'accident

(30) Priority: 02.04.2004 US 559165 P; 29.03.2005 US 092127
(43) Date of publication of application: 05.10.2005
(73) Proprietor: GM Global Technology Operations, Inc., Detroit, MI 48265-3000 (US)
(72) Inventor: Aase, Jan H., Oakland Township Michigan 48306-1680 (US); Browne, Alan L., Grosse Pointe Michigan 48230 (US); Johnson, Nancy L., Northville Michigan 48167 (US); Pan, Hong, Novi Michigan 48374 (US)
(74) Representative: Manitz, Finsterwald & Partner GbR

(56) References cited:
- EP-A- 0 978 442
- EP-A- 1 396 391
- DE-A1- 4 425 830
- DE-A1- 10 014 888
- US-A- 5 454 589

## Description

### CROSS REFERENCE TO RELATED APPLICATIONS

The present application relates to, and claims priority to, United States Provisional Application Serial No. 60/559,165 filed on April 2, 2004, incorporated herein by reference in its entirety.

### BACKGROUND

The present disclosure generally relates to methods for modifying a crash deceleration pulse, and more particularly, to methods for modifying a crash deceleration pulse using volume filling mechanical structures, which are volumetrically reconfigurable such as to occupy a small volume when in a dormant state and a larger volume when deployed. The expanded volume also provides energy management and contact force and deceleration limiting properties to objects impacting the devices.

In the vehicular arts, there are generally two types of dedicated crash energy management structures utilized for minimizing the effect of an impact event: those that are passive, and those that are active. The term active used in the context of dedicated energy management structures refers to selective expansion or movement of one component relative to another component.

Typically, passive energy management structures have a static configuration in which their volume is fixed. The passive energy management structures can dissipate energy and modify the levels and timing of a force/deceleration pulse by being impacted (e.g., crushing or stroking of a piston in a cylinder) so as to absorb the kinetic energy associated with such an event. Since these passive crash energy management structures occupy a maximum volume in the uncrushed/unstroked initial state, these types of structures inherently occupy significant vehicular space that must be dedicated for crash energy management and/or occupant protection -- the contraction space being otherwise unavailable for other use. Expressed another way, passive crash energy management and occupant protection structures use vehicular space equal to their initial volume, which consequently must be dedicated exclusively to impact energy management and/or occupant protection throughout the life of the vehicle. Because of this, some areas of a vehicle interior and/or exterior may be constrained in terms of their design/appearance because of the volume requirements of passive crash energy management and occupant protection devices.

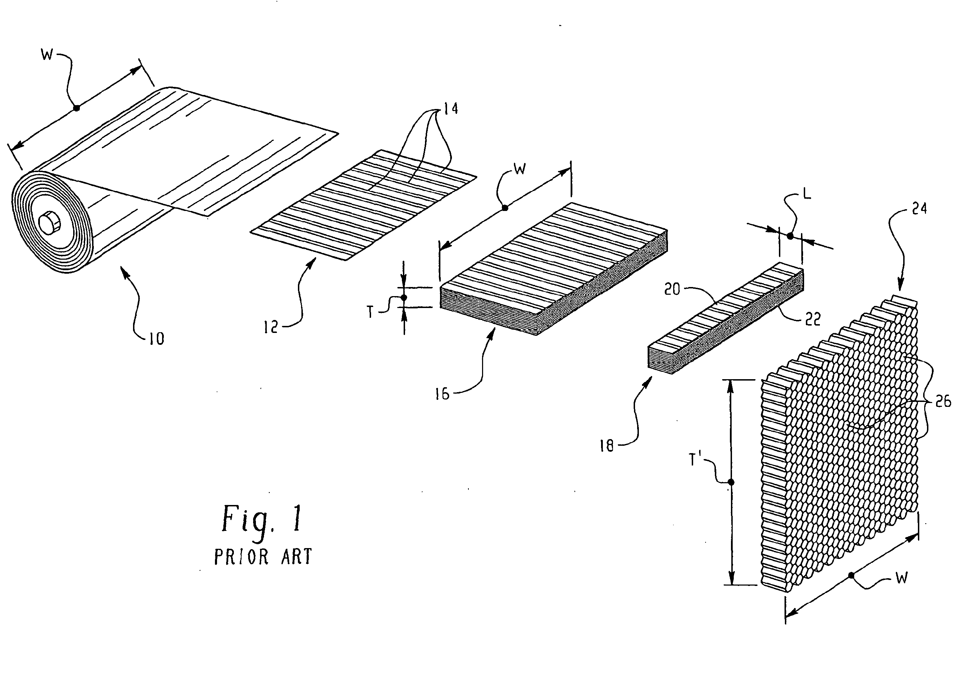

An example of a passive energy management structure that has been used in vehicles is an expanded honeycomb celled material, which is disposed in the expanded form within the vehicle environment. Figure 1 illustrates a honeycomb celled material and its process flow for fabricating the honeycomb-celled material. A roll 10 of sheet material having a preselected width W is cut to provide a number of substrate sheets 12, each sheet having a number of closely spaced adhesive strips 14. The sheets 12 are stacked and the adhesive cured to thereby form a block 16 having a thickness T. The block 16 is then cut into appropriate lengths L to thereby provide so-called bricks 18. The bricks 18 are then expanded by physical separation of the upper and lower faces 20, 22, where adhesive strips serve as nodes to form the honeycomb cells. A fully expanded brick is composed of a honeycomb celled material 24 having clearly apparent hexagonally shaped cells 26. The ratio of the original thickness T to the expanded thickness T' is between about 1 to 10 to about 1 to 60. The honeycomb celled material is then used in fully expanded form within the vehicle environment to provide impact energy management and/or occupant protection (through force and deceleration limiting) substantially parallel to the cellular axis. As noted, because the honeycomb material is used in the fully expanded form, significant vehicular space is used to accommodate the expanded form, which space is permanently occupied by this dedicated energy management/occupant protection structure.

Active energy management/occupant protection structures generally have a predetermined size that expands or moves in response to a triggering event so as to increase their contribution to crash energy management/occupant protection. One type of dedicated active energy management/occupant protection structure is a stroking device, basically in the form of a piston and cylinder arrangement. Stroking devices can be designed, if desired, to have low forces in extension and significantly higher forces in compression (such as an extendable/retractable bumper system) which is, for example, installed at either the fore or aft end of the vehicle and oriented in the anticipated direction of crash induced crush. The rods of such devices would be extended to span the previously empty spaces in response to a triggering event, e.g., upon the detection of an imminent impact event or an occurring impact event (if located ahead of the crush front). This extension could be triggered alternatively by signals from a pre-crash warning system or from crash sensors or be a mechanical response to the crash itself. An example would be a forward extension of the rod due to its inertia under a high G crash pulse. Downsides of such an approach include high mass and limited expansion ratio.

Another example of an active energy management/force and/or deceleration limiting structure is an impact protection curtain, e.g., a roll down inflatable or partially inflatable shade that may cover a window opening in response to a triggering event. The roll down curtain, while being flexible in bending when out of plane, is quite stiff in-plane.
EP 1 396 391 A2 discloses a method of modifying a crash deceleration pulse in a vehicle in accordance with the preamble of claim 1.

Therefore, there it is the object of the present invention to provide an expandable energy management device for impact attenuation that efficiently utilizes vehicle space.

### BRIEF SUMMARY

This object is achieved through the characterizing features of claim 1.

Disclosed herein are methods for modifying a crash deceleration pulse. In one embodiment, the method comprises disposing an energy management device in operative communication with a vehicular surface in a load path, wherein the energy management device comprises a open celled material expandable from a non-expanded state to an expanded state, and an activation mechanism regulating expansion of the open celled material from the non-expanded state to the expanded state; activating the energy management device in response to or in anticipation of an impact event; expanding the open celled material from the non-expanded state to the expanded state; and impacting the expanded state of the open celled material and altering an impact pulse associated with the impact event relative to a baseline in which this energy management device is not present.

The above described and other features are exemplified by the following figures and detailed description.

### BRIEF DESCRIPTION OF THE DRAWINGS

Referring now to the figures, which are meant to be exemplary embodiments, and wherein the like elements are numbered alike.

Figure 1 is a perspective view of a manufacturing process to provide prior art honeycomb celled material;

Figure 2 is a perspective front view of an energy management device comprising compressed honeycomb cellular material in accordance with the present disclosure, shown prior to expansion (stowed or compacted state);

Figure 3 is a perspective front view of a device comprising expanded honeycomb cellular material in accordance with the present disclosure, shown in an expanded state;

Figure 4 is a perspective cut-away view of an energy management device according to the present disclosure, showing an example of an active activation system;

Figure 5 is a broken-away, top plan view, showing a trigger of an active activation system of Figure 4;

Figure 6 is a perspective side view of an energy management device having a support sheet and a protection shield in accordance with the present disclosure, shown prior to expansion (stored state);

Figure 7 is a perspective side view of the device depicted in Figure 6 upon deployment in accordance with the present disclosure; and

Figure 8 is a perspective view of a vehicle illustrating various support structures for employing the energy management assembly;

Figure 9 illustrates an exemplary application of an energy management device disposed intermediate a tire and rocker in a stowed configuration;

Figure 10 illustrates the exemplary application of energy management device of Figure 9 in an expanded configuration; and

Figure 11 graphically illustrates predicted velocity change and crush effectiveness in front loading of a crash pulse as a function of time for a baseline vehicle, a vehicle configured with a 125 PSI rated energy management assembly, and a vehicle configured with a 250 PSI rated energy management assembly.

### DETAILED DESCRIPTION

The present disclosure provides a method of employing active energy management structures (also referred to as force and deceleration delimiting devices) that comprises an expandable volume-filling mechanical structure for purposes of vehicle crash energy management and occupant protection. Advantageously, the expandable volume-filling mechanical structure effectively absorbs the kinetic energy associated with the impact event and can be configured to provide one of more of the following: crash energy dissipation, load path creation, modification of a vehicle deceleration pulse, local stiffening or reinforcement of the vehicle structure, stiffening or reinforcing closed section members subject to lateral loading, pedestrian impact protection, occupant protection, vehicle compatibility during impact events, crash protection to vulnerable components, e.g., engine, interior passenger compartment, and the like.

In one embodiment, the energy management device of the present disclosure comprises an expandable open celled material, wherein expansion of the open celled material is in a plane transverse to the cellular axis of the cells defining the cellular structure. As previously expressed, the term "energy management" also refers to force and/or deceleration limiting since the devices described herein will function to limit the impact force on or deceleration of an object during an impact event. The expanded volume advantageously provides energy management properties to objects impacting the devices.

In one embodiment, the energy management device of the present disclosure comprises an expandable open celled material, wherein expansion of the open celled material is in a plane transverse to the cellular axis of the cells defining the cellular structure. For this embodiment as well as the other embodiments disclosed herein, crash crush is intended optimally, but not necessarily, to be parallel to the cellular axis. By way of example, a suitable open celled material has a honeycomb cellular structure. In a stowed or compact configuration, the honeycomb cellular structure can generally be defined as a honeycomb brick. The honeycomb brick has an initial compact volume in the sense that it is substantially compressed perpendicular to the longitudinal axis of its cells and parallel to the direction in which it is to be deployed. For ease of understanding, reference will now be made to honeycomb cellular structures although it should be understood that other open celled materials that can be compressed and expanded in the manner discussed below are equally suitable for the energy management devices disclosed herein.

The honeycomb brick occupies anywhere from about 1/10th to about 1/60th of the volume that it assumes when in it is fully expanded (i.e., the expansion ratio), depending on the original cell dimensions and wall thicknesses, although higher or lower ratios can be employed depending on the particular application. Honeycomb cell geometries with smaller values of the expansion ratio, in general, deliver larger crush forces.

The materials for forming the honeycomb cellular structure are not intended to be limited. The choices for materials are generally dependent upon the desired crush force (stiffness) for a particular application (i.e., softer or harder metals or composites). In one embodiment, the honeycomb cellular structure is formed of a lightweight metallic material, e.g., aluminum. Other suitable materials that are non-metallic include, but are not limited to, polymers such as nylon, cellulose, and other like materials. The material composition and honeycomb geometries will be determined by the desired application.

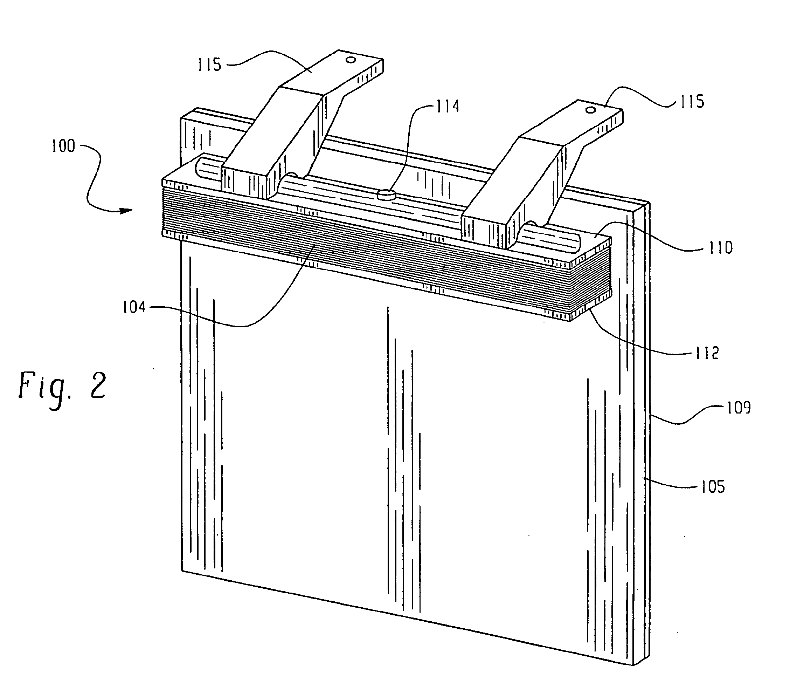

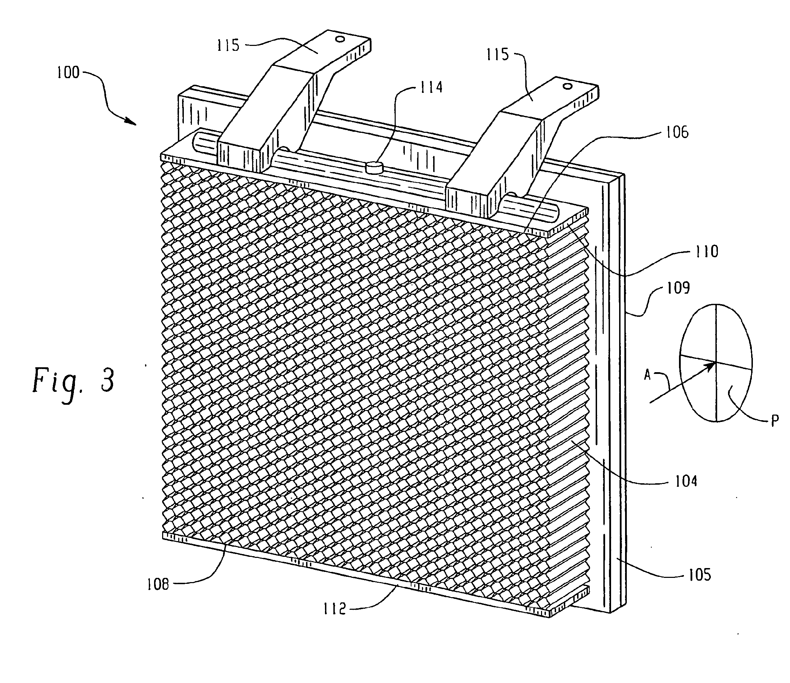

Turning to Figures 2 and 3, perspective views of a force and deceleration delimiting device 100 are shown that employ a honeycomb cellular structure 104. In particular, Figure 2 illustrates the force and deceleration delimiting device in a stowed or compact configuration (i.e., a honeycomb brick configuration) whereas Figure 3 illustrates the force and deceleration delimiting device upon expansion in response to a triggering event.

As shown more clearly in Figure 3, the geometry of the cells form the honeycomb cellular structure, although as noted above, other shapes and configurations are possible that would permit compression and expansion in the manner described herein. The honeycomb cellular structure 104 generally terminates at an upper face 106 and a lower face 108. Attached (such as, for example, by an adhesive) to the upper and lower faces 106, 108 are end cap members 110, 112, respectively. The end cap members 110, 112 are substantially rigid and serve as guides for defining the configuration of the honeycombed cellular structure 104 between the stowed or compacted configuration as shown at Figure 2 and the expanded configuration as shown at Figure 3. One of the end cap members, e.g., 110, is fixedly attached to the vehicle. As such, upon expansion of the force and deceleration delimiting device 100 in response to a triggering event, end cap member 112 moves relative to end cap member 110. In this manner, upon deployment, the expansion of honeycomb material 104 is in a transverse plane P which is preferably perpendicularly oriented to an anticipated crash axis A without expansion or contraction of the crash axis dimension.

The end cap members 110, 112 need not necessarily be planar as shown. Moreover, the end cap members do not need to have the same shape or size. For example, the end cap members 110, 112 may comprise a shape that compliments the area within the vehicle where the energy management device 100 is to be located. For example, in a wheel well, one or both of the end cap members may be curvilinear in shape as well as sized differently to accommodate the shape of the wheel well. As another example, such as may occur for expansion into a narrowing wedge shaped space, the end cap member (e.g., 112) that moves as the honeycomb cellular structure 104 expands may be shorter than the stationary end cap member (e.g., 110) so that the expanded honeycomb cellular structure 104 has a complimentary wedge shape.

An activation mechanism 114 is operably connected to end cap members 110, 112 to facilitate selective expansion of the force and deceleration delimiting device 100 in response to a triggering event. The activation mechanism 114 controls the volumetric state of the honeycomb-cellular structure 104 such that when activated, expansion from the stowed or compact configuration to the expanded configuration occurs. One or more installation brackets 115 may be connected to one of the end cap members 110, 112 so that the force and deceleration delimiting device 100 is connectable to a selected surface of the motor vehicle.

The force and deceleration delimiting device 100 includes a support surface 105 for controlled directional expansion, which will be described in greater detail below. One support surface 105 or alternatively, two support surfaces can be employed to define a sandwich about the honeycomb cellular structure 104, depending on the application. Optionally, the surfaces 105 can be naturally defined by the vehicle structure in which the energy management device 100 is disposed. In a preferred embodiment, the support surface 105 is cooperatively disposed with the honeycomb cellular structure 104 opposite to that of an impact, and more preferably, only when a natural vehicle support surface does not exist. Additionally, in applications in which there may be occupant/pedestrian impact directly against the expanded honeycomb cellular structure 104, there may be a deployable front surface shield or screen 109.

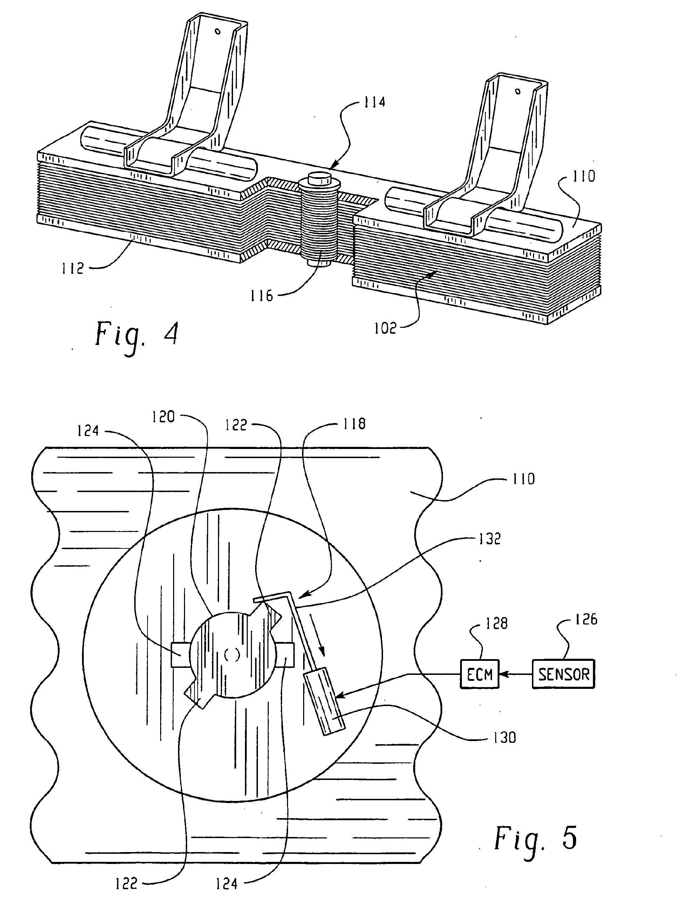

An example of a suitable activation mechanism 114 is shown in Figures 4 and 5. An expansion agent in the form of a compressed spring 116 is abuttingly situated in tension between end cap members 110, 112 when the honeycomb cellular structure 104 is in the compact or stowed configuration. A trigger 118 for selectively releasing energy associated with the compressed spring includes a disk 120 that is rotatably mounted on one of the end cap members, e.g., 110 as shown, wherein the disk has a pair of opposed fingers 122. The shape of the disk 120 is receivable by a similarly shaped opening 124 formed in the end cap member 110. The rotatable disk 120 is further supported by a rigid member (not shown, e.g., a bolt) that is fixedly attached to the opposing end cap member, e.g., 112. Although two opposing fingers are shown, it should be apparent that one or more fingers can be utilized. Moreover, it should be apparent that the shape of the disk 120 or the opening 124 is not intended to be limited and can vary as may be desired provided that locking engagement of the disk 120 against the end cap member 110 occurs in at least one rotational position of the disk and engagement release occurs at a different position.

Activation of the activation mechanism 114 causes the disk 120 to rotate and causes the shape of disk to become aligned with the shape of the opening 124. Upon alignment, the spring 116 is released causing rapid expansion of the honeycomb cellular structure 104. The compressive forces associated with the spring provide the expansion, wherein the magnitude of expansion can generally be increased with greater compressive forces in the spring 116. Other suitable expansion agents may include a pyrotechnic device or a pressurized air cylinder, for example, which is triggered upon rotation of the disk 120 as described or by other triggering means. Other triggering means could be electronically controlled, mechanically controlled, and the like. Alternatively, the activation mechanism 114 may be passive, wherein the impact event itself provides a mechanically trigger.

As previously described, the triggering event activates the activation mechanism 114. As such, the activation mechanism can be in operative communication with a controller for selectively activating the activation mechanism 114. For example, the controller can be an electronic control module 128 that is adapted to receive a signal from a sensor or detector 126, which signal is then interpreted by the electronic control module 128 to activate a solenoid 130. Solenoid 130 includes a linking arm 132 that is shown in operative communication with the disk 120 to effect rotation thereof in response to the activation signal.

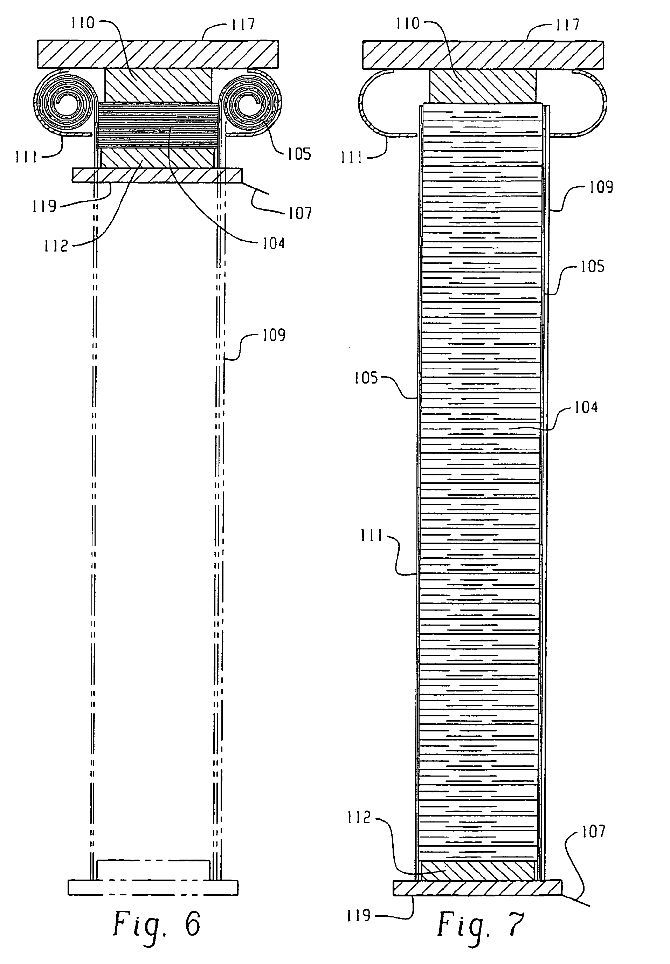

As shown more clearly in Figures 6 and 7, the energy management device 100 further includes the optional support layer 105 and optional shield 109. The support surface 105 functions as a support surface and guide for the force and deceleration delimiting device 100 during expansion thereof. In one embodiment, the support surface 105 and/or shield 109 are operably connected to the end cap member 112 as shown. In this manner, upon movement of end cap member 112 relative to end cap member 110 during expansion, the support surface 105 and shield 109 extend along with the honeycomb cellular structure 104. For example, as shown, the support layer 105 and shield 109 can be spooled (or folded or otherwise compacted as may be desired) when the force and deceleration delimiting device is in the stowed or compacted configuration and linearly expand in the direction of force and deceleration delimiting device 100 expansion to provide the support surface/guide and mitigation functions. The support surface 105 preferably comprises a material that is substantially stiff upon extension and resistant to stretching.

Optionally, the force and deceleration delimiting device 100 includes mounting plates 117, 119, fixedly attached to the end cap members 110, 112, respectively, which may further have connected thereto a connecting structure 107. The vehicle connecting structure 107 may include tethers of a fixed length lying in the plane of honeycomb cellular structure 104 routed through openings that define the individual honeycomb cells so that expansion of the energy management device occurs along a desired direction path. More than one vehicle connecting structure 107 can be used and may be attached at various points of the honeycomb cellular structure 104.

When employed within a passenger compartment of a vehicle, the support surface 105, if one is employed, faces away from the interior of a vehicle, whereas the honeycomb cellular structure 104 faces the interior of the vehicle. If required by the nature of the honeycomb cellular material 104, a shield 109 faces the interior of the vehicle. However, it should be apparent by those in the art that placement and style of the device 100 will be determined by the desired application. In one embodiment, the support layer 105 and the honeycomb cellular structure 104 may be physically separate with respect to each other upon expansion thereof. In another embodiment, the support layer 105 and the honeycomb cellular structure 104 may be adjacent to each other, each being connected only at selected points, wherein the selected points may constrain the honeycomb material 104 at predetermined points. In a similar manner, the shield 109 may be disposed and connected at selected points along the honeycomb material.

The force and deceleration delimiting device 100 further includes an optional protection shield 111 about the spooled support surface 105 and/or shield 109. The protection shield 111 is comprised of any of a variety of suitable flexible materials known to those skilled in the art.

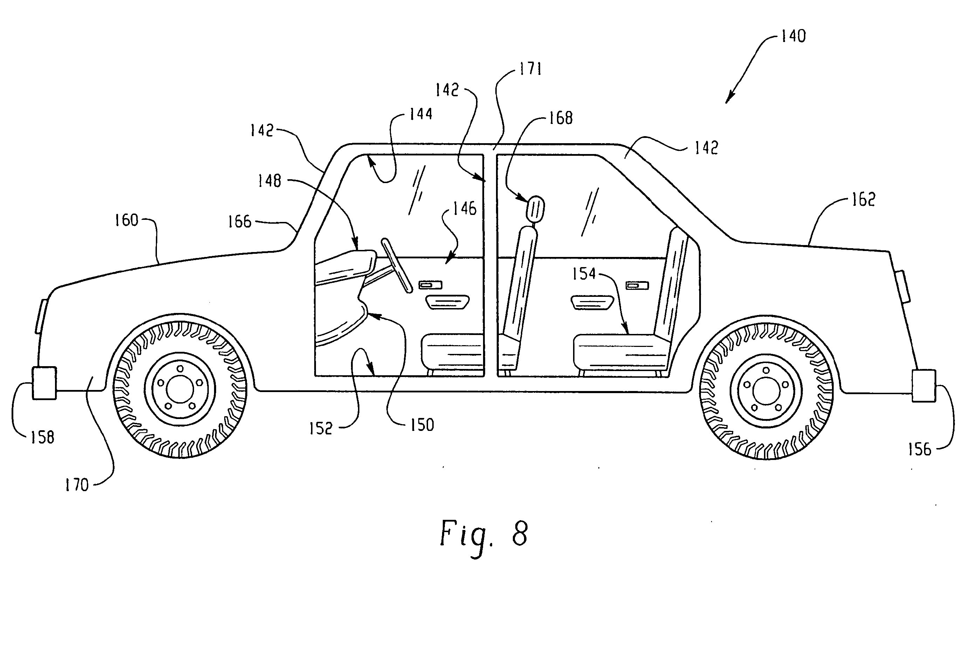

Figure 8 is a perspective view of a vehicle 140 illustrating various support structures and stationary surfaces for employing the energy management device 100. For example, the force and deceleration delimiting device 100 can be used in conjunction with conventional padded interior surfaces in the vehicle 140. Specifically, the device 100 can be used for the door pillars 142, the header 144, the door interiors 146, dashboard 148, the knee bolsters 150, head rest 168, and other areas such as under the carpet on the vehicle floor 152, the seat 154 itself, or like surfaces where absorption of kinetic energy/limiting of forces/decelerations caused by impact of an object with the surface is desired and/or proper positioning of an occupant is desired during a triggering event such as an impact. For example, locating the energy management assembly under the carpet can be used to assist the positioning of an occupant's knees with respect to the knee bolster. In the seat area, the device can be strategically positioned to provide stiffening at an edge of the seat 154. Forces/decelerations due to impact with other areas of the vehicle, such as the door pillars 142, can be limited with device 100. In addition, the device 100 can help protect occupants in impacts against exterior objects that might enter the vehicle 140.

As further shown in Figure 8, the device 100 may be placed outside the vehicle 120. As shown, the device 100 may be positioned at an exterior/interior surface of a bumper 156, 158, hood 160, trunk 162, roof 172, wheel well 170, cowl 166, and like areas.

As further shown in Figure 8, the device 100 may be placed outside the vehicle 120. As shown, the device 100 may be positioned at an exterior/interior surface of a bumper 156, 158, hood 160, trunk 162, roof 171, wheel well 170, cowl 166, and like areas. Also, it should be apparent that the device 100 can be disposed within the empty spaces of the engine compartment, about the interior defining surfaces, as well as within and about the structural rails that define the vehicle.

The force and deceleration delimiting device 100 can be tailored to the site of application. For example, for exterior sites such as the vehicle bumper and fender, triggering can occur prior to a triggering event, or at the time of the triggering event. The triggering event is not intended to be limited to a single event. For example, the triggering event may occur if a variety of conditions are detected or sensed, e.g., an impact event at a vehicle speed greater than 15 kilometers per hour. As such, a pre-crash sensor and/or an impact severity prediction algorithm can be employed to program the electronic control module 128. The expansion of the honeycomb-celled structure would be rapid or slow, greater or lesser depending on how the system is programmed. Devices used in this location could be designed to be reversible in the event of false crash detection, as their deployment has no effect on the operation of the vehicle. For example, devices 100 within the vehicle 120 may be deployed either before or during an impact event. If deployed before the impact event, the expansion of the honeycomb-celled material could be fast or slow, and would require a pre-impact sensor (and, optimally, with a impact severity algorithm) for selective triggering. If deployed during an impact event, the expansion of the honeycomb-cellular structure must be rapid, and should occur only at speeds where significant crush will occur. Accordingly, triggering may be effected by crash caused displacements. Devices used in this location would not be reversible and would require a very accurate detection system, as their deployment could interfere with operation of the vehicle.

As noted, the force and deceleration devices can be disposed in numerous locations throughout the vehicle for various functions. By way of example, for crash energy dissipation, the devices can be disposed internally to the rails for frontal and offset impact events, in empty spaces within the engine compartment such as between the engine block and dashboard area, and between the engine block and radiator as well as laterally alongside the engine block for side impacts.

For load path creation, the devices can be disposed internally to the rails for frontal and offset impact events as well as variously in the front portion of the rails, in the s-bend region, and at rail kink and buckling points. In addition, the devices can be located the devices can be disposed internally to the rails for frontal and offset impact events as well as in empty spaces within the engine compartment. Also, the device can be disposed between the tire and rocker region within the wheel well and internal the central tunnel portion. Likewise, the device can be disposed internal to a central armrest, if present, when the armrest is in the up position.

For modification including front loading of the vehicle deceleration pulse, the devices can be disposed within empty spaces within the engine compartment such as in front of the radiator as well as between the radiator and the engine block. In addition, the devices can be disposed internal to the rails at locations suitable responsive to frontal impact. Also, for modification including front loading of the vehicle deceleration pulse can be disposed behind and/or within the bumper.

For local stiffening of the vehicle structure and alteration of failure crush modes, the devices can be disposed internal to the rails at locations suitable responsive to frontal and/or offset impact. For side impact events, the device can be disposed internal to the rocker section and internal to the B pillar. for example.

For stiffening of closed section members subjected to lateral loading, the devices can be disposed internal to the rocker and internal to the B pillar on low mass struck vehicle (deploy to increase stiffness-e.g., manually deploy within the rail after welding and painting operations are complete). For side impact events, the device can be disposed internal to the rocker, internal to the B pillar, internal to the central tunnel, internal to the central armrest when the armrest is in the up position, and the like.

For pedestrian impact protection, the devices can be disposed within the bumper (either deploy in front of bumper or alternatively un-deploy within the bumper). Also, the devices can be disposed within the hood (either deploy over hood or deploy under hood if hood is too soft).

For occupant impact protection, the devices can be disposed to provide a low energy alternative to knee bags, side curtains and the like. In addition, the device can stretch laterally under carpets within the dash area and/or be positioned to stretch laterally within the surface of an interior trim panel to cause device expansion toward the occupant. Likewise, the device can be position as deployable pusher blocks (within and internal to the door, within the vehicle interior up or down from the armrest and the like) and deployable head restraints (both between laterally adjacent seats and between front and back seating areas).

For vehicle compatibility in an impact event, the devices can be disposed internal to the rocker sections as well as the B-pillar. In addition, the device can be disposed internal to the rails and bumper of a striking large mass vehicle (undeploy within rails and bumper to soften pulse). Likewise, the device can be disposed internal to the rocker and internal to the B pillar on low mass struck vehicle (deploy to increase stiffness-e.g., manually deploy within the rail after welding and painting operations are complete)

For crash protection of vulnerable components, the devices can be disposed can be rapped around components such as the fuel tank.

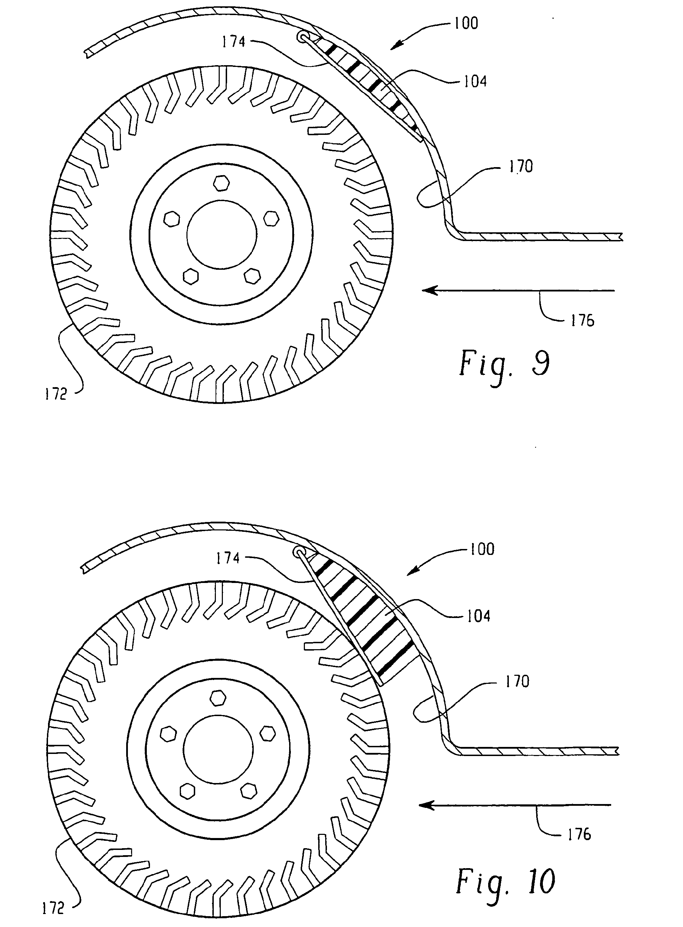

Figures 9-10 illustrate an exemplary application, wherein the force and deceleration-delimiting device 100 is disposed between a wheel well 170 and tire 172 of the vehicle. The direction of the vehicle is provided by arrow 176. Upon activation such as may occur during a frontal impact event, the device 100 expands from the compact configuration as shown in Figure 9 to the expanded configuration of Figure 10. An optional protective flap 174 is shown pivotably operative with the device expansion. In this manner, in a frontal impact event, expansion of the device permits the entire vehicle to absorb and dissipate the kinetic energy associated with the frontal impact event. The space normally apparent between the wheel well and the tire is minimized upon expansion of the device thereby providing a load path such that the entire vehicle is involved.

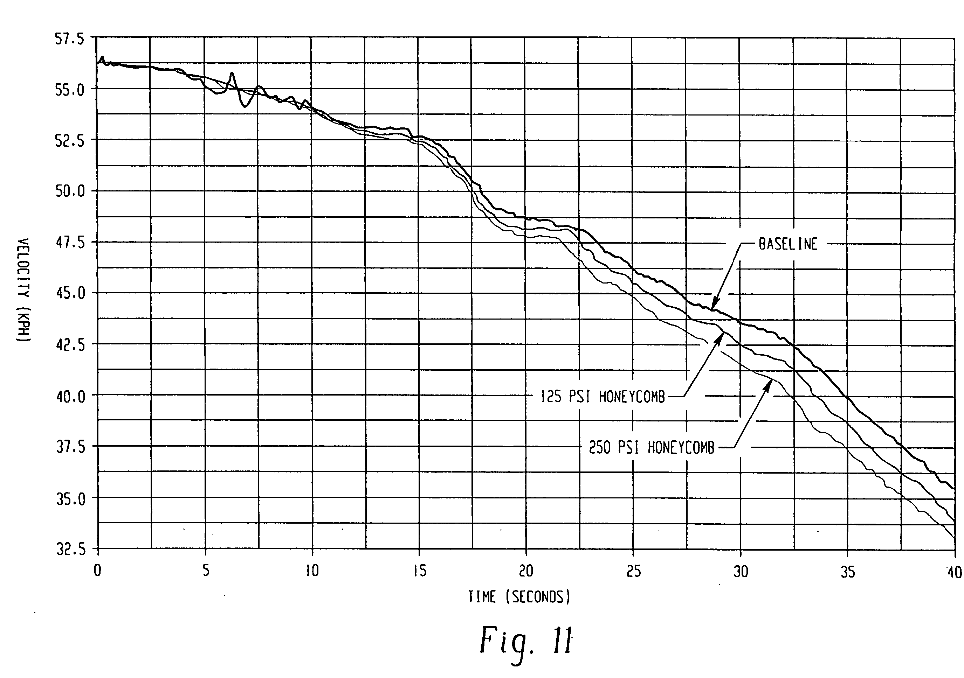

Figure 11 illustrates a modeled analysis of predicted velocity change and crush effectiveness in front loading of a crash pulse for a baseline vehicle, a vehicle configured with a 125 pounds per square inch (PSI) rated energy management assembly, and a vehicle configured with a 250 PSI rated energy management assembly. As shown, the crash pulse was more effectively front loaded with the energy- management device disposed in the path of the load relative to a baseline in which this added energy management assembly was not present. Moreover, as expected, the higher rated honeycomb cell structure provided the greatest velocity change in the initial part of the crash event. By front-loading the crash pulse, peak G's to which the objects within the vehicle are subjected by interactions with airbags and belt systems may be reduced. These predictions/conclusions are, of course, subject to experimental verification. As evidence, the effective acceleration increased from a baseline of 16.9 gravity (G) to 18.1 G and higher for various loads to the energy management device over a 40 millisecond time period.

Table 1 illustrates side impact analysis of predicted effectiveness in reducing penetration. Testing was done under standard test procedures well known to those skilled in the art.

| | **Model** | **Intrusion (mm)** |
|---|---|---|
| Comparative Example No. 1 | Baseline | 450 |
| Example No. 1 | Baseline and Deployed Device | 385 |

Side impact intrusion under constant loads, with and without a fully deployed energy- management device disposed therein, was analyzed. In each instance, the presence of the energy-management device was predicted to advantageously and effectively reduce intrusion.

With regard to the above described applications and uses of energy management device, a reversible stored energy means for deployment may be used to return the device to its dormant (i.e., compact) state after it has been deployed if not crushed/damaged in a subsequent impact. Resetting of the means of deployment would involve resetting of the deployed honeycomb celled material 104 and a recharging or resetting of the stored energy device, which could be done manually or alternatively, automatically. Whether an irreversible or a reversible embodiment is chosen is generally dependent upon the application and the means of sensing and control used to trigger deployment. Devices based on pre-crash sensors, because of the potential for false detects, with many existing sensors, might well be designed to be reversible but the devices should be non-intrusive and not affect vehicle functionality. There is little motivation for designing devices to be reversible whose deployment is based on crash sensing or indirectly by displacements caused by vehicle crush. Stored energy means based on mechanical springs are less desirable than those based on compressed air as those based on compressed air, in contrast to those based on mechanical springs, are easily engineered to release the stored energy when not needed, which dramatically improves the safety of such devices. For example, in one embodiment, compressed air may be released when a vehicle is stopped and/or the ignition is turned off and then be automatically reintroduced when the vehicle is placed into gear or the ignition is turned on.

It should be noted that the various forces discussed above which are needed directly or indirectly to expand or assist in expanding the honeycomb celled material 104 to its deployed state is generally about less than 1 kilo Newton (kN). The honeycomb-celled material may expand at a broad range of rates of expansion for example from about 0.01 to about 15 meters per second (m/s). Very simple means of bonding rigid end caps 110 and 112 to honeycomb celled material 104 in its dormant state may be used such as, for example, a two part room temperature curing epoxy adhesive.

While the disclosure has been described with reference to an exemplary embodiment, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure not be limited to the particular embodiment disclosed as the best mode contemplated for carrying out this disclosure, but that the disclosure will include all embodiments falling within the scope of the appended claims.

## Claims

1. A method for modifying a crash deceleration pulse in a vehicle comprising:
disposing an energy management device (100) in operative communication with a vehicular surface in a load path, wherein the energy management device (100) comprises an open celled material (104) expandable from a non-expanded state to an expanded state, and an activation mechanism regulating expansion of the open celled material (104) from the non-expanded state to the expanded state;
activating the energy management device (100) in response to an impact event;
expanding the open celled material (104) from the non-expanded state to the expanded state; and
impacting the expanded state of the open celled material and modifying a crash pulse associated with the impact event relative to a baseline in which the energy management device (100) is not present
**characterized by**
supporting and guiding the expanding open celled material (104) along a support surface (105); and by
providing a shield (109) adjacent to the support surface (105).

2. The method of Claim 1, further comprising reversing the expansion of the open celled material (104) from the expanded state to the non-expanded state.

3. The method of any one of the preceding claims, wherein impacting the expanded state of the open celled material (104) increases an effective deceleration level of the crash pulse.

4. The method of any one of the preceding claims, wherein the effective deceleration level is less than 20 Gs.

5. The method of any one of the preceding claims, wherein modifying the crash pulse comprises dissipating crash energy, creating a load path, modifying a vehicle deceleration pulse, local stiffening a vehicle structure, stiffening closed section members, modifying occupant protection, modifying pedestrian protection, modifying vehicle compatibility, protecting vulnerable components, and combinations comprising more than one of the foregoing.

6. The method of Claim 5, wherein protecting vulnerable components comprises positioning the device about a fuel tank when the energy management device (100) is in the expanded state.

7. The method of Claims 5 or 6, wherein dissipating crash energy comprises positioning the energy management device (100) internally to rails of the vehicle, and/or in empty spaces of an engine compartment.

8. The method of any one of Claims 5-7, wherein creating the load path comprises positioning the energy management device internally to rails of the vehicle, and/or in a front portion of the rails, and/or in an s-bend region of the rails, and/or at rail kink and buckling points of the rail, and/or in empty spaces within an engine compartment, and/or between a tire and a rocker region, and/or within a wheel well and internal the central tunnel portion, and/or internal to a central armrest when the armrest is in the up position.

9. The method of any one of Claims 5-8, wherein modifying the vehicle deceleration pulse comprises positioning the energy management device (100) within empty spaces within an engine compartment, and/or internally to rails of the vehicle at locations responsive to frontal impact events, and/or behind or within a bumper of the vehicle.

10. The method of any one of Claims 5-9, wherein local stiffening a vehicle structure comprises positioning the energy management device (100) internal to rails of the vehicle, and/or at internal to a rocker section, and/or internal to a B pillar.

11. The method of any one of Claims 5-10, wherein stiffening closed section members subjected to lateral loading comprises positioning the energy management device (100) internal to a rocker, and/or internal to a B pillar, an/or internal to a central tunnel, and/or internal to a central armrest when the armrest is in the up position.

12. The method of any one of Claims 5-11, wherein modifying pedestrian impact protection comprises positioning the energy management device (100) within a bumper, and/or within a hood.

13. The method of any one of Claims 5-12, wherein modifying occupant impact protection comprises positioning the energy management device (100) underneath a floor of the vehicle, and/or within a trim panel, and/or within deployable pusher blocks and/or within deployable head restraints.

14. The method of any one of Claims 5-13, wherein modifying vehicle compatibility comprises positioning the energy management device (100) internal to a rocker sections, and/or internal to a B-pillar, and/or internal to rails of the vehicle, and/or within a bumper.

15. The method of any one of the preceding claims, wherein the expanded state of the open celled material (104) comprises a transverse plane substantially perpendicular (P) to an anticipated crash axis (A), wherein the anticipated crash axis is substantially parallel to a cellular axis of cells of the open celled material (104).

16. The method of any one of the preceding claims, wherein the open celled material (104) comprises plurality of cells having a honeycomb shape.

## Patentansprüche

1. Verfahren zum Modifizieren eines Unfall-Verzögerungsimpulses bei einem Fahrzeug, das umfasst, dass
eine Energieverwaltungseinrichtung (100) in wirksamer Verbindung mit einer Fahrzeugoberfläche in einem Belastungspfad angeordnet wird, wobei die Energieverwaltungseinrichtung (100) ein offenzelliges Material (104), das aus einem nicht ausgedehnten Zustand in einen ausgedehnten Zustand ausgedehnt werden kann, und einen Aktivierungsmechanismus umfasst, welcher eine Ausdehnung des offenzelligen Materials (104) aus dem nicht ausgedehnten in den ausgedehnten Zustand regelt;
die Energieverwaltungseinrichtung (100) in Ansprechen auf ein Aufprallereignis aktiviert wird;
das offenzellige Material (104) aus dem nicht ausgedehnten Zustand in den ausgedehnten Zustand ausgedehnt wird; und
der ausgedehnte Zustand des offenzelligen Materials beaufschlagt wird und ein mit dem Aufprallereignis verknüpfter Unfallimpuls relativ zu einer Grundlinie, bei welcher die Energieverwaltungseinrichtung (100) nicht vorhanden ist, modifiziert wird,
**dadurch gekennzeichnet, dass**
das sich ausdehnende offenzellige Material (104) entlang einer Stützoberfläche (105) unterstützt und geführt wird; und dass
eine der Stützoberfläche (105) benachbarte Abschirmung (109) bereitgestellt wird.

2. Verfahren nach Anspruch 1, das ferner umfasst, dass die Ausdehnung des offenzelligen Materials (104) aus dem ausgedehnten Zustand in den nicht ausgedehnten Zustand umgekehrt wird.

3. Verfahren nach einem der vorherigen Ansprüche, wobei das Zusammenpressen des ausgedehnten Zustands des offenzelligen Materials (104) einen effektiven Verzögerungspegel des Unfallimpulses erhöht.

4. Verfahren nach einem der vorherigen Ansprüche, wobei der effektive Verzögerungspegel weniger als 20 G beträgt.

5. Verfahren nach einem der vorherigen Ansprüche, wobei das Modifizieren des Unfallimpulses ein Dissipieren von Unfallenergie, ein Erzeugen eines Belastungspfades, ein Modifizieren eines Fahrzeugverzögerungsimpulses, ein lokales Versteifen einer Fahrzeugstruktur, ein Versteifen von Elementen mit einem geschlossenen Abschnitt, ein Modifizieren eines Insassenschutzes, ein Modifizieren eines Fußgängerschutzes, ein Modifizieren einer Fahrzeugkompatibilität, ein Schützen verletzlicher Komponenten und Kombinationen umfasst, die mehr als eines der vorherigen umfassen.

6. Verfahren nach Anspruch 5, wobei das Schützen verletzlicher Komponenten ein Anordnen der Einrichtung um einen Kraftstofftank umfasst, wenn sich die Energieverwaltungseinrichtung (100) in dem ausgedehnten Zustand befindet.

7. Verfahren nach Anspruch 5 oder 6, wobei das Dissipieren von Unfallenergie ein Anordnen der Energieverwaltungseinrichtung (100) von innen an Schienen des Fahrzeugs und/oder in Leerräumen eines Motorraums umfasst.

8. Verfahren nach einem der Ansprüche 5 bis 7, wobei das Erzeugen des Belastungspfades ein Anordnen der Energieverwaltungseinrichtung von innen an Schienen des Fahrzeugs und/oder in einem vorderen Abschnitt der Schienen und/oder in einem S-förmig gebogenen Bereich der Schienen und/oder an einem Schienenknick und Knickpunkten der Schiene und/oder in Leerräumen in einem Motorraum und/oder zwischen einem Reifen und einem Schwingenbereich und/oder in einem Radschacht und im Inneren des Zentraltunnelabschnitts und/oder in einer zentralen Armstütze, wenn sich die Armstütze in der Obenstellung befindet, umfasst.

9. Verfahren nach einem der Ansprüche 5 bis 8, wobei das Modifizieren des Fahrzeugverzögerungsimpulses ein Anordnen der Energieverwaltungseinrichtung (100) in Leerräumen in einem Motorraum und/oder von innen an Schienen des Fahrzeugs an Stellen, die auf frontale Aufprallereignisse ansprechen, und/oder hinter oder in einem Stoßfänger des Fahrzeugs umfasst.

10. Verfahren nach einem der Ansprüche 5 bis 9, wobei das lokale Versteifen einer Fahrzeugstruktur ein Anordnen der Energieverwaltungseinrichtung (100) von innen an Schienen des Fahrzeugs und/oder von innen an einem Schwingenabschnitt und/oder von innen an einer B-Säule umfasst.

11. Verfahren nach einem der Ansprüche 5 bis 10, wobei das Versteifen von Elementen mit einem geschlossenen Abschnitt, die einer seitlichen Belastung ausgesetzt sind, ein Anordnen der Energieverwaltungseinrichtung (100) von innen an einer Schwinge und/oder von innen an einer B-Säule und/oder von innen an einem Zentraltunnel und/oder von innen an einer zentralen Armstütze, wenn sich die Armstütze in der Obenstellung befindet, umfasst.

12. Verfahren nach einem der Ansprüche 5 bis 11, wobei das Modifizieren eines Fußgängeraufprallschutzes ein Anordnen der Energieverwaltungseinrichtung (100) in einem Stoßfänger und/oder in einer Motorhaube umfasst.

13. Verfahren nach einem der Ansprüche 5 bis 12, wobei das Modifizieren des Insassenaufprallschutzes ein Anordnen der Energieverwaltungseinrichtung (100) unter einem Boden des Fahrzeugs und/oder in einem Verkleidungsblech und/oder in auslösbaren Schieberblöcken und/oder in auslösbaren Kopfstützen umfasst.

14. Verfahren nach einem der Ansprüche 5 bis 13, wobei das Modifizieren der Fahrzeugkompatibilität ein Anordnen der Energieverwaltungseinrichtung (100) von innen an Abschnitten einer Schwinge und/oder von innen an einer B-Säule und/oder von innen an Schienen des Fahrzeugs und/oder in einem Stoßfänger umfasst.

15. Verfahren nach einem der vorherigen Ansprüche, wobei der ausgedehnte Zustand des offenzelligen Materials (104) eine quer verlaufende Ebene umfasst, die im Wesentlichen rechtwinklig (P) zu einer angenommenen Unfallachse (A) verläuft, wobei die angenommene Unfallachse zu einer Zellachse der Zellen des offenzelligen Materials (104) im Wesentlichen parallel ist.

16. Verfahren nach einem der vorherigen Ansprüche, wobei das offenzellige Material (104) mehrere Zellen mit einer wabenförmigen Gestalt umfasst.

## Revendications

1. Procédé de modification d'une impulsion de décélération de choc dans un véhicule, comportant les étapes suivantes :
disposer un dispositif de gestion d'énergie (100) en communication opérationnelle avec une surface de véhicule dans un trajet de charge, dans lequel le dispositif de gestion d'énergie (100) comporte un matériau à cellules ouvertes (104) dilatable à partir d'un état non dilaté vers un état dilaté, et un mécanisme d'activation régulant la dilatation du matériau à cellules ouvertes (104) à partir de l'état non dilaté vers l'état dilaté,
activer le dispositif de gestion d'énergie (100) en réponse à un événement d'impact,
dilater le matériau à cellules ouvertes (104) à partir de l'état non dilaté vers l'état dilaté, et
percuter l'état dilaté du matériau à cellules ouvertes et modifier une impulsion de choc associée à l'événement d'impact par rapport à une ligne de référence dans laquelle le dispositif de gestion d'énergie (100) n'est pas présent, **caractérisé par** les étapes suivantes :
supporter et guider le matériau à cellules ouvertes se dilatant (104) le long d'une surface de support (105), et
fournir un écran protecteur (109) adjacent à la surface de support (105).

2. Procédé selon la revendication 1, comportant en outre une inversion de la dilatation du matériau à cellules ouvertes (104) à partir de l'état dilaté vers l'état non dilaté.

3. Procédé selon l'une quelconque des revendications précédentes, dans lequel percuter l'état dilaté du matériau à cellules ouvertes (104) augmente un niveau effectif de décélération de l'impulsion de choc.

4. Procédé selon l'une quelconque des revendications précédentes, dans lequel le niveau effectif de décélération est inférieur à 20 Gs.

5. Procédé selon l'une quelconque des revendications précédentes, dans lequel une modification de l'impulsion de choc comporte une dissipation d'une énergie de choc, une création d'un trajet de charge, une modification d'une impulsion de décélération de véhicule, un raidissement local d'une structure de véhicule, un raidissement d'éléments à section fermée, une modification de la protection de l'occupant, une modification de la protection des piétons, une modification de la compatibilité du véhicule, une protection des composants vulnérables, et des combinaisons comportant plus d'une parmi les éléments mentionnés ci-dessus.

6. Procédé selon la revendication 5, dans lequel une protection des composants vulnérables comporte un positionnement du dispositif autour d'un réservoir de carburant lorsque le dispositif de gestion d'énergie (100) est dans l'état dilaté.

7. Procédé selon les revendications 5 ou 6, dans lequel une dissipation de l'énergie de choc comporte un positionnement du dispositif de gestion d'énergie (100) intérieurement par rapport à des rails du véhicule, et/ou dans des espaces vides d'un compartiment moteur.

8. Procédé selon l'une quelconque des revendications 5 à 7, dans lequel une création du trajet de charge comporte un positionnement du dispositif de gestion d'énergie intérieurement par rapport à des rails du véhicule, et/ou dans une partie avant des rails, et/ou dans une zone incurvée en s des rails, et/ou au niveau d'un vrillage de rail et de points de gauchissement du rail, et/ou dans des espaces vides dans un compartiment moteur, et/ou entre un pneumatique et une zone de balancier, et/ou dans un passage de roue et à l'intérieur de la partie de tunnel central, et/ou à l'intérieur d'un accoudoir central lorsque l'accoudoir est dans la position haute.

9. Procédé selon l'une quelconque des revendications 5 à 8, dans lequel une modification de l'impulsion de décélération de véhicule comporte un positionnement du dispositif de gestion d'énergie (100) dans des espaces vides dans un compartiment moteur, et/ou intérieurement par rapport à des rails du véhicule au niveau d'emplacements sensibles à des événements d'impact frontal, et/ou derrière ou dans un pare-chocs du véhicule.

10. Procédé selon l'une quelconque des revendications 5 à 9, dans lequel un raidissement local d'une structure de véhicule comporte un positionnement du dispositif de gestion d'énergie (100) à l'intérieur des rails du véhicule, et/ou à l'intérieur d'un tronçon de balancier, et/ou à l'intérieur d'un pilier B.

11. Procédé selon l'une quelconque des revendications 5 à 10, dans lequel un raidissement des éléments à section fermée soumis à un chargement latéral comporte un positionnement du dispositif de gestion d'énergie (100) à l'intérieur d'un balancier, et/ou interne à un pilier B, et/ou interne à un tunnel central, et/ou interne à un accoudoir central lorsque l'accoudoir est dans la position haute.

12. Procédé selon l'une quelconque des revendications 5 à 11, dans lequel une modification de la protection des piétons vis-à-vis d'un impact comporte un positionnement du dispositif de gestion d'énergie (100) dans un pare-chocs, et/ou dans un capot.

13. Procédé selon l'une quelconque des revendications 5 à 12, dans lequel une modification de la protection d'un occupant vis-à-vis d'un impact comporte un positionnement du dispositif de gestion d'énergie (100) sous un plancher de véhicule, et/ou dans un panneau d'habillage, et/ou dans des blocs pousseurs déployables et/ou dans des appuis-tête déployables.

14. Procédé selon l'une quelconque des revendications 5 à 13, dans lequel une modification de la compatibilité du véhicule comporte un positionnement du dispositif de gestion d'énergie (100) à l'intérieur de sections de balancier, et/ou à l'intérieur d'un pilier B, et/ou à l'intérieur de rails du véhicule, et/ou dans un pare-chocs.

15. Procédé selon l'une quelconque des revendications précédentes, dans lequel l'état dilaté du matériau à cellules ouvertes (104) comporte un plan transversal sensiblement perpendiculaire (P) à un axe de choc prévu (A), dans lequel l'axe de choc prévu est sensiblement parallèle à un axe de cellule des cellules du matériau à cellules ouvertes (104).

16. Procédé selon l'une quelconque des revendications précédentes, dans lequel le matériau à cellules ouvertes (104) comporte une pluralité de cellules ayant une forme de nid d'abeilles.
